# FASCICULE DE BREVET EUROPEEN

(11) **EP 1 358 624 B1**
(45) Date de publication et mention de la délivrance du brevet: **09.05.2007**
(21) Numéro de dépôt: 02701378.8
(22) Date de dépôt: 01.02.2002
(51) Int. Cl.: G06K 9/00, G06F 1/00

(54) **SYSTEME D'IDENTIFICATION OU D'AUTHENTIFICATION BIOMETRIQUE**
BIOMETRISCHES IDENTIFIKATIONS- ODER AUTHENTIFIKATIONSSYSTEM
BIOMETRIC IDENTIFICATION OR AUTHENTICATION SYSTEM

(30) Priorité: 07.02.2001 FR 0101634
(43) Date de publication de la demande: 05.11.2003
(73) Titulaire: SAGEM Défense Sécurité, 75015 Paris (FR)
(72) Inventeur: CHOLLET, Christophe, F-95000 Cergy (FR)
(74) Mandataire: Loisel, Bertrand
(86) Numéro de dépôt international: PCT/FR2002/000391
(87) Numéro de publication internationale: WO 2002/063548

(56) Documents cités:
- GB-A- 2 278 478
- US-A- 6 040 783
- US-A- 6 167 517

## Description

La présente invention concerne les systèmes d'identification et/ou d'authentification biométrique. Ces systèmes manipulent des données biométriques qui consistent par exemple en des données de codage d'empreintes digitales. Bien entendu, elles peuvent aussi représenter d'autres types de mesures biométriques, par exemple, sur l'oeil, la main, le visage, la voix...

L'invention concerne plus particulièrement les systèmes de taille relativement importante, dans lesquels de nombreux enregistrements d'empreintes ou d'autres données biométriques sont stockés dans des bases de données. Ces systèmes doivent traiter des requêtes de reconnaissance accompagnées de données codées représentant une empreinte digitale, et déterminer, parmi les nombreux enregistrements d'empreinte mémorisés, celui ou ceux qui présentent la concordance la plus étroite.

Le système doit également pouvoir traiter les requêtes de mise à jour afin d'insérer ou de supprimer des enregistrements d'empreintes mémorisés dans les bases de données.

Il est connu d'adopter dans ces grands systèmes des architectures distribuées, avec un certain nombre d'unités de reconnaissance (« matching unit ») entre lesquelles la charge de traitement des requêtes de reconnaissance est répartie. Chaque unité de reconnaissance fonctionne avec une partie de la base de données. Plusieurs unités de reconnaissance forment une chaîne (« string ») couvrant l'ensemble de la base de données. Plusieurs chaînes de ce type peuvent être prévues afin de traiter en parallèle plusieurs requêtes de reconnaissance. Pour chaque partie de la base, un unité de données (« data unit ») assure la mise à jour des données mémorisées en fonction des requêtes d'insertion et de suppression présentées par les utilisateurs.

La coordination du traitement des différentes requêtes est relativement délicate pour garantir la cohérence générale du système. De nombreuses requêtes de diverses natures se succèdent et le système doit être capable de rester stable et de répondre de manière fiable à chacune de ces requêtes.

Atteindre cet objectif nécessite habituellement des développements logiciels considérables dans le cadre d'une solution propriétaire du système.

Un but de la présente invention est de simplifier ce développement afin d'assurer un bon comportement du système et une certaine souplesse d'évolution.

L'invention propose ainsi un système d'identification ou d'authentification biométrique, comprenant plusieurs unités de reconnaissance respectivement associées à des unités de mémorisation de données biométriques, des unités de données pour tenir à jour les données biométriques des unités de mémorisation et des moyens de contrôle pour traiter des requêtes de reconnaissance et/ou de mise à jour des données biométriques mémorisées issues d'au moins une unité cliente, les moyens de contrôle comprenant des moyens de gestion de transactions agencés selon un moniteur transactionnel pour faire communiquer lesdites unités.

Le moniteur transactionnel est un ensemble de modules logiciels créé, dans des applications commerciales de transactions à distance, pour assurer les propriétés d'atomicité, de cohérence, d'isolation et de durabilité (« ACID »). On a constaté que ces propriétés permettaient de simplifier considérablement la coordination des échanges dans un système d'identification biométrique distribué.

La propriété d'atomicité assure que l'ensemble des opérations relevant d'une transaction forment une unité d'oeuvre, ce qui signifie qu'elles doivent toutes être effectuées avec succès ou toutes rejetées.

La propriété de cohérence signifie que chaque transaction doit faire passer la base de données d'un état cohérent à un autre. Si la transaction n'atteint pas un état final stable, elle ramène le système à l'état antérieur.

La propriété d'isolation signifie que les résultats d'une transaction ne sont visibles pour les autres transactions qu'une fois la transaction validée. En d'autres termes, bien qu'elles soient exécutées simultanément, les transactions semblent être exécutées séquentiellement.

La propriété de durabilité signifie que les modifications résultant d'une transaction validée ne seront jamais perdues.

D'autres particularités et avantages de la présente invention apparaîtront dans la description ci-après d'un exemple de réalisation non limitatif, en référence aux dessins annexés, dans lesquels :
- la figure 1 est un schéma illustrant l'architecture d'un système selon l'invention ; et
- la figure 2 est un diagramme illustrant différents processus mis en oeuvre dans le système.

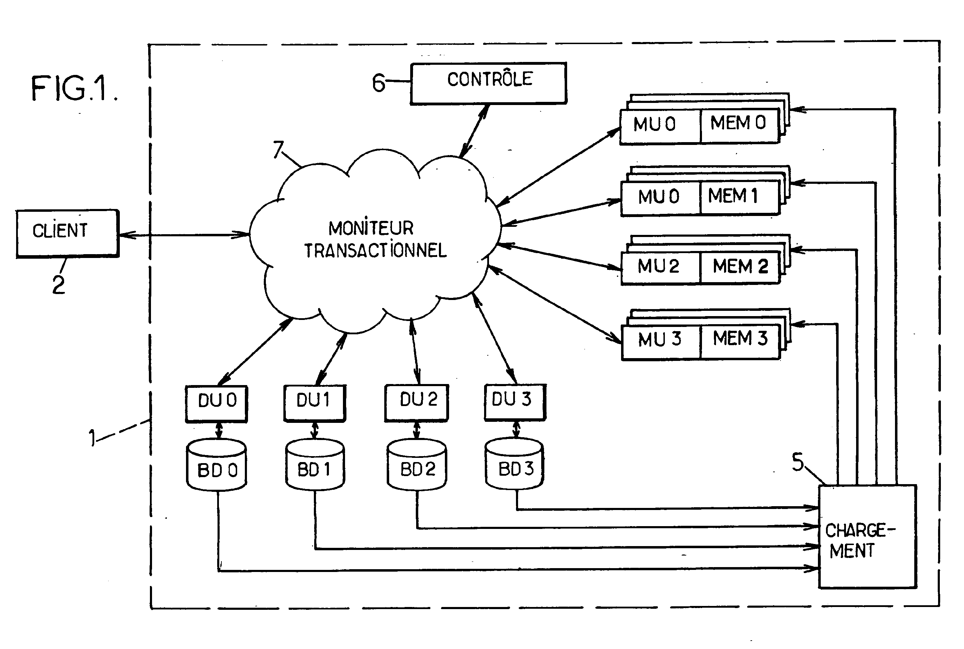

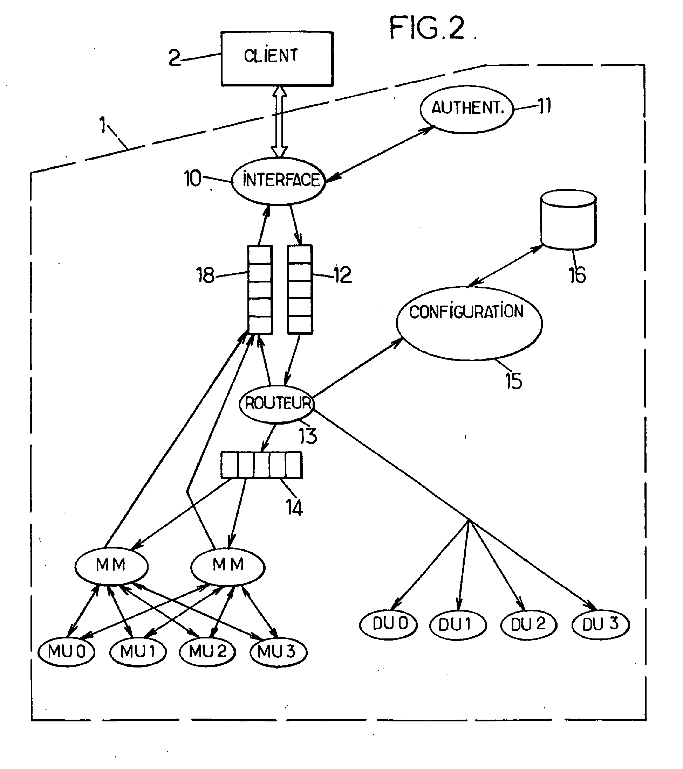

Le système 1 représenté sur les figures 1 et 2 est utilisé dans une application d'identification par empreintes digitales. C'est ce qu'on appelle un « matcher ». Il comprend plusieurs serveurs communiquant entre eux. Un « serveur » s'entend ici soit comme un processus logiciel, soit comme une machine programmée suivant un tel processus.

Ces serveurs comprennent un certain nombre d'unités de reconnaissance MU0-MU3 destinées à traiter des requêtes de reconnaissance issues d'une ou plusieurs unités clientes 2. L'ensemble des données d'empreintes est subdivisé en n parties (n = 4 dans l'exemple représenté). Chacune de ces parties est chargée dans une mémoire MEMO-MEM3 de l'une au moins des unités de reconnaissance MU0-MU3. Chaque unité interrogée MUO-MU3 sélectionne une ou plusieurs entrées de sa partie de la base de données au moyen d'algorithmes de reconnaissance. Ces réponses sont ensuite consolidées pour présenter une réponse globale au client 2.

Comme illustré schématiquement sur la figure 1, les unités de reconnaissance MU0-MU3 peuvent être présentes chacune en un certain nombre d'exemplaires, associé chacun à la même partie de la base de données. Le système comporte alors plusieurs chaînes de n = 4 unités de reconnaissance MU0-MU3. Une requête de reconnaissance est traitée par l'une des ces chaînes.

Un serveur de chargement 5 assure la présence des différentes parties de la base de données d'empreintes dans les mémoires des unités de reconnaissance MU0-MU3. Il obtient les données en question à partir de n unités de données DU0-DU3 qui traitent des requêtes de mises à jour (insertion, suppression,...) issues des unités clientes 2. Les unités de données DU0-DU3 tiennent également à jour une copie de la base de données dans une mémoire de stockage à long terme, par exemple des unités à disque dur BD0-BD3.

Le système 1 comporte en outre des serveurs formant une ou plusieurs unités de contrôle 6 qui assurent un certain nombre de fonctions de supervision : gestion des requêtes, administration, tenue de journaux de requêtes, autorisation d'accès, paramétrage et configuration, gestion des files d'attente, initialisation des bases de données, indexage, gestion de fichiers, etc.

Pour organiser les échanges entre les différents serveurs et le ou les clients, les unités de contrôle 6 coopèrent avec des éléments d'un moniteur transactionnel 7.

Les moniteurs transactionnels sont des moyens de gestion de transactions bien connus dans les architectures client-serveur. Plusieurs types de moniteurs transactionnels ont été normalisés, notamment par l'Organisation Internationale pour la Standardisation (spécifications OSI-CCR et OSI-TP) et par X/Open (spécification DTP, « Distributed Transaction Processing »). Des produits commerciaux utilisables à titre d'exemple comme moniteur transactionnel 7 dans le système 1 sont « Encina » commercialisé par la société IBM et « Tuxedo » commercialisé par la société BEA Software.

En référence à la figure 2, le système 1 comporte un module 10 d'interface avec les unités clientes 2, qui coopère de façon classique avec un serveur d'authentification 11 validant les accès au système par les clients.

Les requêtes émanant des clients 2 sont placées dans une file d'attente d'entrée 12 avant d'être soumises à un serveur de routage 13. Le serveur 13 sépare les requêtes de reconnaissance routées vers une seconde file d'attente 14 et les requêtes de mise à jour routées vers les unités de données DU0-DU3. D'autres requêtes peuvent être acheminées vers un serveur 15 de configuration et de paramétrisation du système. Ce serveur 15 coopère avec une unité de mémoire 16 où sont enregistrés les paramètres de configuration du système.

Les requêtes de mise à jour sont traitées par les unités de données DU0-DU3, qui enregistrent les modifications dans les bases de données stockées BD0-BD3, et qui adressent au serveur de chargement 5 des commandes de mise à jour des données présentes dans les mémoires MEMO-MEM3 associées aux unités de reconnaissance MU0-MU3.

Le traitement des requêtes de reconnaissance sortant de la file d'attente 14 est supervisé par une ou plusieurs unités de gestion de reconnaissance MM (« Matching Management »). Celles-ci présentent les requêtes aux unités de reconnaissance MU0-MU3, en tenant compte de la partition des bases de données d'empreintes et de l'occupation des différentes chaînes. Les unités MM recueillent les réponses produites par les unités de reconnaissance MU0-MU3, consolident les résultats retournés par ces unités MU0-MU3 et renvoient les résultats consolidés vers une file d'attente de sortie 18. Le module d'interface 10 extrait ces résultats de la file d'attente 18 pour les présenter aux unités clientes concernées.

Sur le diagramme de la figure 2, les flèches représentées à l'intérieur du système 1 représentent des échanges supervisés par le moniteur transactionnel 7, de manière à assurer les propriétés ACID précitées. En outre, le moniteur transactionnel 7 prend en charge les serveurs satisfaisant à la norme d'interfaces XA. On pourra utiliser des serveurs de fichiers satisfaisant à cette norme pour pérenniser les données biométriques et les données de configuration.

## Revendications

1. Système d'identification ou d'authentification biométrique, comprenant plusieurs unités de reconnaissance (MU0-MU3) respectivement associées à des unités de mémorisation de données biométriques (MEMO-MEM3), des unités de données (DU0-DU3) pour tenir à jour les données biométriques des unités de mémorisation et des moyens de contrôle (5, 6, 7) pour traiter des requêtes de reconnaissance et/ou de mise à jour des données biométriques mémorisées issues d'une unité cliente (2), les moyens de contrôle comprenant des moyens de gestion de transactions pour faire communiquer lesdites unités, les moyens de gestion de transactions (7) étant agencés selon un moniteur transactionnel.

2. Système selon la revendication 1, comprenant au moins une chaîne d'unités de reconnaissance (MU0-MU3) coopérant avec des unités de mémorisation respectives (MEM0-MEM3) contenant chacune une partie des données biométriques, chaque partie étant respectivement associée à l'une des unités de données (DU0-DU3), les moyens de contrôle (6) comprenant des moyens de distribution des requêtes de reconnaissance entre les unités de reconnaissance d'une chaîne et des moyens de consolidation des réponses retournées par les unités de reconnaissance.

3. Système selon la revendication 2, comprenant plusieurs chaînes d'unités de reconnaissance (MU0-MU3) pour traiter en parallèle plusieurs requête de reconnaissance simultanées, chaque partie des données biométriques étant mémorisée de manière redondante, sous le contrôle de l'unité de données associée (DU0-DU3), dans les unités de mémorisation correspondantes des chaînes.

## Claims

1. A biometric identification or authentication system, comprising several matching units (MU0-MU3) associated respectively with biometric data storage units (MEM0-MEM3), data units (DU0-DU3) for updating the biometric data of the storage units and control means (5, 6, 7) for processing matching requests and/or requests for updating stored biometric data originating from a client unit (2), the control means comprising transaction management means for causing said units to communicate, the transaction management means (7) being designed as a transactional monitor.

2. The system as claimed in claim 1, comprising at least a string of matching units (MU0-MU3) cooperating with respective storage units (MEM0-MEM3) each containing a part of the biometric data, each part being respectively associated with one of the data units (DU0-DU3), the control means (6) comprising means of distribution of matching requests among the matching units of a string and means of consolidating responses returned by the matching units.

3. The system as claimed in claim 2, comprising several strings of matching units (MU0-MU3) for processing several simultaneous matching requests in parallel, each part of the biometric data being stored redundantly, under the control of the associated data unit (DU0-DU3), in the corresponding storage units of the strings.

## Patentansprüche

1. System zur biometrischen Identifikation oder Authentisierung, das mehrere Erkennungseinheiten (MU0 - MU3) umfasst, die mit Speichereinheiten für biometrische Daten (MEM0 -MEM3), mit Dateneinheiten (DU0 - DU3) zur Aktualisierung der biometrischen Daten der Speichereinheiten bzw. mit Steuermitteln (5, 6, 7) verbunden sind, um Anforderungen zur Erkennung und/oder zur Aktualisierung der gespeicherten biometrischen Daten, die aus einer Kundeneinheit (2) stammen, zu verarbeiten, wobei die Steuermittel Mittel zur Steuerung von Transaktionen umfassen, um diese Einheiten kommunizieren zu lassen, wobei die Mittel zur Steuerung von Transaktionen (7) gemäß einem Dialogmonitor angeordnet sind.

2. System nach Anspruch 1, das mindestens eine Kette von Erkennungseinheiten (MU0 - MU3) umfasst, die mit jeweiligen Speichereinheiten (MEM0 -MEM3) zusammenwirken, die jeweils einen Teil der biometrischen Daten enthalten, wobei jeder Teil mit einer jeweiligen Dateneinheit (DU0 - DU3) verbunden ist, wobei die Steuermittel Mittel zur Verteilung der Erkennungsanforderungen auf die Erkennungseinheiten einer Kette sowie Mittel zur Konsolidierung der von den Erkennungseinheiten zurückgesandten Antworten umfassen.

3. System nach Anspruch 2, das mehrere Ketten von Erkennungseinheiten (MU0 - MU3) umfasst, um parallel mehrere simultan auftretende Erkennungsanforderungen zu verarbeiten, wobei jeder Teil der biometrischen Daten in den entsprechenden Speichereinheiten der Ketten unter der Steuerung der damit verbundenen Dateneinheit (DU0 - DU3) redundant gespeichert wird.
